# EUROPEAN PATENT SPECIFICATION

(11) **EP 0 493 128 B1**
(45) Date of publication and mention of the grant of the patent: **23.06.1999**
(21) Application number: 91312055.6
(22) Date of filing: 27.12.1991
(51) Int. Cl.: H04N 7/30

(54) **Image processing apparatus**
Einrichtung zur Verarbeitung von Bildern
Dispositif de traitement d'images

(30) Priority: 28.12.1990 JP 40892290; 28.12.1990 JP 40892390; 28.12.1990 JP 40894290; 29.01.1991 JP 906391
(43) Date of publication of application: 01.07.1992
(60) Divisional application: 96202230.7
(73) Proprietor: CANON KABUSHIKI KAISHA, Tokyo (JP)
(72) Inventor: Hoshi, Nobuhiro, c/o Canon Kabushiki Kaisha, Ohta-ku, Tokyo (JP); Shikakura, Akihiro, c/o Canon Kabushiki Kaisha, Ohta-ku, Tokyo (JP); Kaneko, Yushi, c/o Canon Kabushiki Kaisha, Ohta-ku, Tokyo (JP)
(74) Representative: Beresford, Keith Denis Lewis

(56) References cited:
- WO-A-87/02210
- US-A- 4 189 748
- IEE PROCEEDINGS-F/COMMUNICATIONS, RADAR AND SIGNAL PROCESSING vol. 135, no. 6, December 1988, SREVENAGE, GB pages 528 - 538 , XP35755 'Effect of channel errors on source coded image data and the provision of adequate protection of transmission line'
- SYMPOSIUM RECORD BROADCAST SESSIONS 16th International TV Symposium Montreux, Switzerland; 17-22 June 1989 pages 387-409; K. Grotz et al.: 'Image Coding Techniques for 64 kbit/s Channels'
- SUPERCOMM/ICC '90 Georgia, US; April 15-19, 1990 Pages 890-903; K. Fazel et al.: 'APPLICATION OF UNEQUAL ERROR PROTECTION CODES ON COMBINED SOURCE-CHANNEL CODING OF IMAGES'
- IEEE TRANSACTIONS ON CONSUMER ELECTRONICS vol. 35, no. 3, August 1989, NEW YORK, US pages 450 - 457 , XP65969 C. YAMAMITSU ET AL. 'AN EXPERIMENTAL STUDY FOR A HOME-USE DIGITAL VTR'

## Description

The present invention relates to an image processing apparatus, particularly to one equipped with image processing means which has a function of expanding compressed image data specifically compressed image data encoded by run-length. It also relates to an image processing system including an encoding transmitter and a method of image processing.

Conventionally, there is known a technique of transmitting image data after performing a frequency transform (transformation) of image data for each sub-image pixel block of the image to achieve data compression. In particular, by separating the frequency components of each block into high-frequency components and low-frequency components, or into AC frequency components and a DC component, and encoding those components separately from each other, compression efficiency of images is increased.

However, the above prior art has had a disadvantage that if an error occurs during the transmission or reproduction of encoded data, an image signal including false image data results and image quality is deteriorated remarkably. In the case of using variable-length codes in encoding the above high-frequency components, it may sometimes happen that even the number of data is not reproduced accurately and a quite gross deterioration of image quality such as missing of image data occurs.

Meanwhile, in the field of transmitting images in a digital form, there have also conventionally been proposed a variety of encoding methods for cutting down the quantity of information before transmitting images because the quantity of information is very large.

Among them, there is known a method of carrying out an orthogonal transform, quantizing coefficients after the transform, and forming variable-length codes, for example zero run length (ZRL) codes.

In the above-mentioned prior art, which does not include error detecting means, however, if an error occurs in a transmission path, such an error cannot be corrected, leading to a gross deterioration of image quality.

Moreover, in an image transmission system of the type that a moving image signal is digitized and image data is transmitted via transmission paths such as optical fibres or communication satellites and recording media such as magnetic tapes, error correcting codes (ECC) for detecting and correcting transmission (or reproduction) errors are utilised to correct the transmission errors at the reception side (or the reproduction side) based on the error correcting codes. Erroneous pixel data which cannot be corrected by using error correcting codes is subjected to interpolation processing to form an approximate value from the surrounding pixels.

In order to avoid a deterioration of image quality caused by the interpolation processing, it is required that the surrounding pixels utilised for the interpolation are free from errors. When adopting highly efficient encoding (image compression) which has been widely used in recent years, the surrounding pixels capable of being utilised for the interpolation are restricted. In a DPCM (difference pulse code modulation) method, for example, in which reset is made for each line, if an incorrigible error occurs, the original data cannot be reproduced by using pixel data of the same line. Accordingly, only those pixels which are included in the upper and lower adjacent lines can be utilised for interpolation in this case. Further, in an encoding method that uses an orthogonal transform such as a discrete cosine transform (DCT), if an incorrigible error occurs, all the pixels included in a transmission block (e.g. 8 pixels vertical x 8 pixels horizontal) cannot be used to reproduce the original signal. As a result, a deterioration of image quality cannot be prevented even by the interpolation using the upper and lower lines.

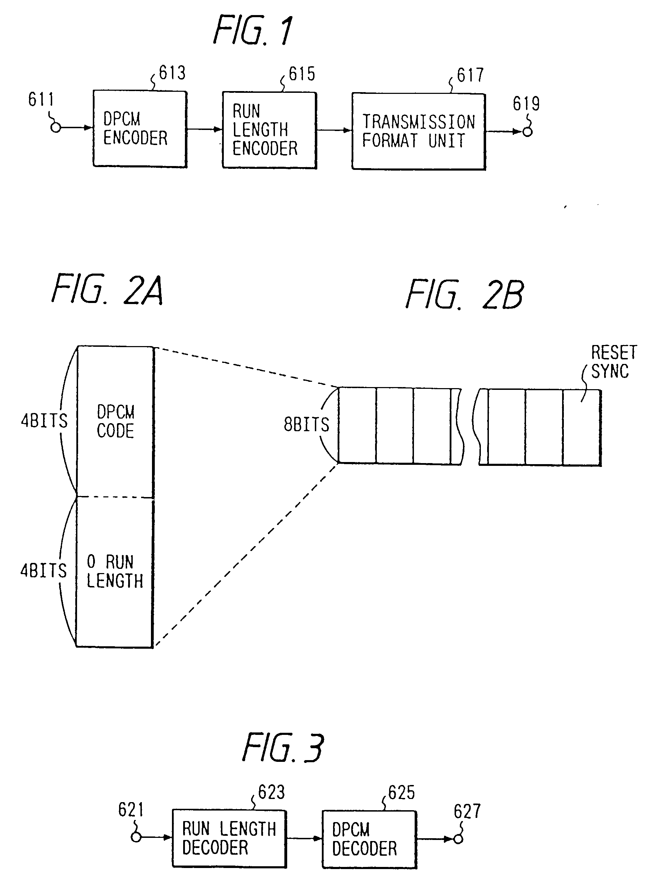

Additionally, in the field of transmitting information such as images and voices in a digital form, there have been proposed various encoding methods for cutting down the amount of data transmitted. One known run-length coding method is to encode data by combining the number of successive 0s and a value other than 0 into a set. On the other hand, a forecast difference encoding method or a difference pulse code modulation (hereinafter referred to as DPCM) encoding method is also known which compresses information by utilizing correlation between sample values close to each other. There is further known an encoding method that the above two methods are combined with each other. Fig. 1 is a block diagram showing an encoding method using a combination of these two methods. Image data of 8 bits inputted through an input terminal 611 is applied to a DPCM encoder 613 for DPCM encoding into 4 bits. Specifically, the DPCM encoder 613 assigns DPCM codes of 4 bits to respective difference values as shown in Table 1 below.

**Table 1**

| Range of Difference Values | DPCM Code | Representative Value of Difference |
|---|---|---|
| -255 ∼ -94 | 15 | -140 |
| -93 ∼ -70 | 13 | -80 |
| - 69 ∼ - 50 | 11 | -58 |
| -49 ∼ -34 | 9 | -40 |
| -33 ∼ -22 | 7 | -27 |
| -21 ∼ -13 | 5 | - 17 |
| -12 ∼ -6 | 3 | -8 |
| -5 ∼ -2 | 1 | -3 |
| -1 ∼ 1 | 0 | 0 |
| 2 ∼ 5 | 2 | 3 |
| 6 ∼ 11 | 4 | 8 |
| 12 ∼ 20 | 6 | 15 |
| 21 ∼ 35 | 8 | 27 |
| 36 ∼ 53 | 10 | 44 |
| 54 ∼ 93 | 12 | 70 |
| 94 ∼ 255 | 14 | 150 |

An image generally has correlation between sample values close to each other such that many difference signals occur as 0 and many DPCM codes occur as 0. The DPCM codes encoded into 4 bits are outputted to a run-length encoder 615. As shown in Fig. 2A, the run-length encoder 615 combines the DPCM code other than 0 and the number of successive 0s (hereinafter referred to as a 0 run-length), before the DPCM code,into a set for each DPCM code of 4 bits.

At this time, by limiting the 0 run-length to 16 at maximum, the run-length codes can be each expressed in 8 bits. The 8-bit run-length codes thus encoded by the run-length encoder 615 are added with a reset synch bit in a transmission format unit 617 as shown in Fig. 2B and then delivered to an output terminal. A reset synch bit is added, for example, after the processing of each line.

Fig. 3 is a block diagram showing a configuration of a decoder device in cooperation with the encoding section of Fig. 1. The run-length code and the reset synch bit both transmitted through a transmission path are applied to an input terminal 621, and a run-length decoder 623 decodes the DPCM code by inserting 0s in the number corresponding to the 0 run-length before each DPCM code until arrival of the reset synch bit. The data decoded to the DPCM code is outputted to a DPCM decoder 625 for decoding to image data of 8 bits, which are then delivered to an output terminal 627.

With the above conventional method, however, if an error occurs in a transmission path, such an error cannot be corrected and image quality deteriorates remarkably since no error detection is included.

As mentioned before, in the field of transmitting information such as images and voices in a digital form, there have been proposed various encoding methods for cutting down the amount of data transmitted. One known run-length coding method is to encode data by combining the number of successive 0s and a value other than 0 into a set. On the other hand, a transform encoding method is also known which performs an orthogonal transform of pixels to be transmitted and quantises transmitted data. There is further known an encoding method that the above two methods are combined with each other.

With the above conventional methods, however, if an error occurs in a transmission path, such an error cannot be corrected and image quality deteriorates remarkably because of including no error detecting means.

The use of error correction coding schemes in the transmission and reception of run-length encoded orthogonal coefficient block data is discussed at length in the following published article entitled "Effect of channel errors on source coded image data and the provision of adequate protection of transmission bits" in IEE Proceedings, vol.135, Pt.F, No.6, Dec. 1988, pages 528-538. Relevant matter disclosed in this article is recited in the preamble of the main apparatus and method claims appended. Notably, this article concerns the correction of correctable transmission errors and provides no discussion of incorrigible transmission errors and processing to cope with such errors.

The present invention has been made in view of the problems in the prior art as set forth above.

An object of the present invention is to provide an image processing apparatus and an image processing method to improve the decoding of encoded data which is encoded by run-length encoding.

An image processing apparatus, an image processing system, and a method of image processing, in accordance with the present invention, are recited in the appended claims.

A characteristic feature of the claimed apparatus is the provision of error concealment means, which is co-operable with error detection means, and operable to replace the orthogonal coefficient block data constituting a defective block, this being a block produced by the decoding of run-length encoded orthogonal block data including an incorrigible transmission error, by orthogonal coefficient block data constituting a replacement block to conceal the effect of the incorrigible error. The orthogonal coefficient block data of the defective block, in a case where there is no incorrigible error in the DC component of the received encoded block data used to retrieve the DC orthogonal coefficient data of the defective block, is replaced by orthogonal coefficient block data consisting of the valid DC orthogonal coefficient and substituted zero-valued AC orthogonal coefficient data, constituting the remainder of a replacement block.

Error correction check codes are provided for both run-length encoded AC orthogonal coefficient block data and for encoded DC orthogonal coefficient data. In any case the error correction check codes may be parity check codes.

Conveniently the orthogonal transformation and inverse orthogonal transformation may be performed by a discrete cosine transform and its inverse.

It is mentioned that the replacement of parts of pixel block data or, alternatively, parts of orthogonal coefficient block data, has previously been considered as a means of error concealment. International Patent Application WO-A-8702210 at page 13, lines 1 to 7 describes such means of error concealment in which edge data, amongst the orthogonal coefficient block data for a given pixel block, are interpolated from the orthogonal coefficient block data for an adjacent pixel block.

In the accompanying drawings:
Fig. 1 is a block diagram of a conventional encoding device;
Figs. 2A and 2B are diagrams for explaining operation of Fig. 1;
Fig. 3 is a block diagram of a conventional decoding device;
Fig. 4 is a block diagram showing a configuration of an image processing system;
Fig. 5 is a diagram showing one example of a data transmission format; and
Fig. 6 is a block diagram showing a configuration of a preferred embodiment of the present invention.

An example of an image processing system, preceding discussion of the invention, and a preferred embodiment of the present invention will be described hereinbelow. The following details are given by way of example only.

The image decoding device described below, comprises means for detecting and correcting an error caused during transmission or in reproduction from a recording medium, and means for replacing decoded data in the relevant block by a predetermined setting value based on error information produced from the detecting and correcting means. After detecting an error caused on a transmission path and carrying out correction processing, if it is found that the relevant block has its DC component free from error and any AC component including an incorrigible error, all the data in the relevant block are replaced by a value of the DC component based on such information, so that each pixel value in the relevant block can be replaced by a value close to a true value.

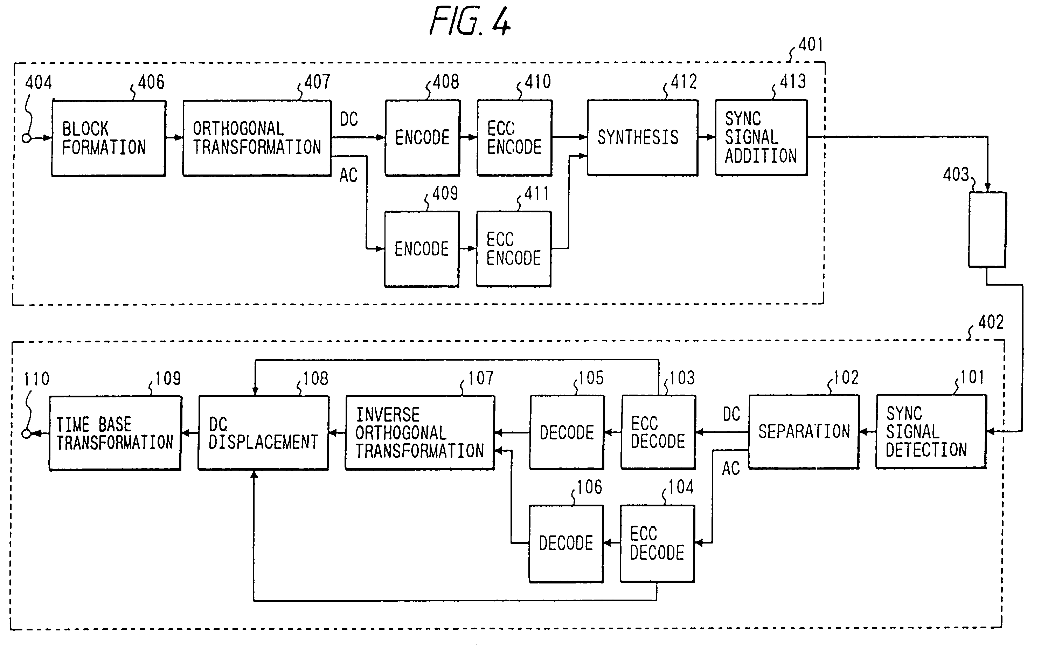

Fig. 4 illustrates a block diagram showing configuration of an image decoding device and a corresponding image encoding device.

Denoted at reference numeral 401 is an encoding device and 402 is a decoding device, both the devices being connected to each other via a transmission path 403. The transmission path 403 is in the form of a transmission medium for aboveground electric-wave or light space:, such as an optical fibre satellite or microwave guide, in the case of instantaneous transmission, and in the form of a storage medium including a tape-like medium such as a digital VTR or DAT, a disk-like medium such as a floppy disk or optical disk, and a solid state medium such as a semiconductor memory.

First, a video signal inputted from an image reader comprising CCD sensors, TV camera, video recorder, host computer or the like is applied to an input terminal 404 of the encoding device 401 and divided in a block formation circuit 406 into sub-image blocks each of which comprises a plurality of pixel data, e.g., blocks each consisting of 8 x 8 pixels. The data thus divided into block units is transformed in an orthogonal transform circuit 407 into frequency components for each block by, for example, a DCT (discrete cosine transform). The transformed data is outputted as a low-frequency component and a high-frequency component, for example, a DC (direct current) component and an AC (alternating current) component other than the former, in separate fashion. These components are separately encoded by encoding circuits 408, 409 for compressing the amount of information. As examples of the encoding, the DC component may be encoded by a PCM (pulse code modulation) encoding method and the AC component may be encoded by a run-length Huffman encoding method. Respective encoded data outputted from the encoding circuits 408, 409 are further encoded by error correction code (ECC) encoding circuits 410, 411 to have error detecting and correcting codes as a measure for coping with an error possibly caused during transmission, and then synthesized by a synthesis circuit 412 together in a time-serial manner. After that, the synthesized data is added in a synch signal addition circuit 413 with a synch signal for each predetermined number of blocks for the purpose of transmission or recording, followed by delivery into the transmission path 403.

Meanwhile, as for the data transmitted and received by the image decoding device 402, the synch signal is detected by a synch signal detecting circuit 101 and the following signal processing is carried out on the basis of the detected synch signal.

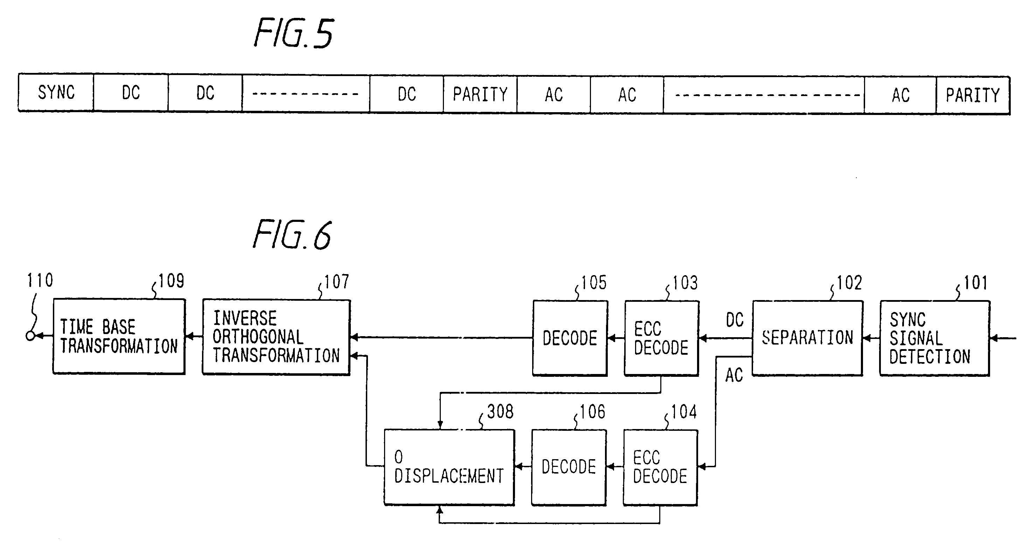

The transmitted data is first separated by a separation circuit 102 into encoded data corresponding to the DC component and encoded data corresponding to the AC component. At this time, the format of the encoded data is selected such that the DC components and the AC components are positively separated from each other in one synch block, for example, as shown in Fig. 5.

The respective separated data are then inputted to ECC decoding circuits 103, 104 for detection and correction of the error caused during transmission. The ECC decoding circuits 103, 104 deliver the corrected data to decoding circuits 105, 106 and, simultaneously, deliver error information to a DC replacement circuit 108 depending on the respective correction results.

After the correction processing the respective encoded data corresponding to the DC component and the AC components are inputted to the decoding circuits 105, 106 and then subjected to decoding processing for restoration into information of the DC component and the AC components. If any error still remains in the encoded data, the correct information cannot be restored.

In using variable-length encoding, as the encoding method for the AC component, it may happen that the decoded value of the AC component does not become a true value and, besides, even the number of data is not restored.

The respective decoded data outputted from the decoding circuits 105, 106 are transformed by an inverse orthogonal transform circuit 107 from values indicating the frequency components into data indicating a pixel value in the block. However, if the error cannot be completely corrected by the ECC decoding circuits 103, 104 as mentioned before, the input value to the inverse orthogonal transform circuit 107 is not in itself correct information and thus an output value of the inverse orthogonal transform circuit 107 will be data quite different from the correct pixel data.

Therefore, when the error information produced from the ECC decoding circuit 103 indicates that no error is present in the DC component for the relevant block, and the error information produced from the ECC decoding circuit 104 indicates that an incorrigible error is present in the AC components for the relevant block, a DC replacement circuit 108 replaces all the pixel values in the relevant block by the respective value given by the DC component .

With the above replacing operation, even if an incorrigible error still remains as mentioned above, each pixel value in the block is given by the value of the DC component which is representative of an average value, meaning that the data can be restored to a value, though not exactly the same as the true value, relatively close to the true value.

The respective data are rearranged by a time base transform circuit 109 to line up on the same time base as for the video signal inputted to the encoding device, followed by delivery from an output terminal 110. The output terminal 110 is connected to a monitor, printer or the like for forming an image.

According to the image decoding device thus arranged, even if an incorrigible error occurs on the transmission path, a deterioration of image quality is minimized.

### Preferred Embodiment

Fig. 6 shows a preferred embodiment of the present invention.

In Fig. 6, the function effected by the DC replacement circuit 108 in Fig. 4 is realised by a 0 replacement circuit 308. The other circuit blocks are the same as those in Fig. 4 and, therefore, are denoted by the same reference numerals.

When the respective error information outputted from the ECC decoding circuits 103, 104 indicate that no error is present in the DC component for the relevant block and an incorrigible error is present in the AC components for the relevant block, the 0 replacement circuit 308 replaces all the values of the AC components. With that replacing operation, the respective data inputted to the inverse orthogonal transform circuit 107 have their AC components set equal to 0. Consequently, the inverse orthogonal transform circuit 107 outputs the transformed data such that all the pixel values in the relevant block are given by the respective value of the DC component, with the result of the similar advantage to the arrangement of Fig. 4.

According to the above embodiment of the present invention, as described above, by using error correction means for detecting and correcting an error caused during transmission or in reproduction from a recording medium, and by using error concealment means for replacing all the decoded data, it is possible to minimise a deterioration of image quality even if an incorrigible error occurs and also realise an image decoding device which requires only a small amount of extra hardware.

Especially, in the above embodiment, a frequency transform coefficient due to the orthogonal transform is encoded using the DC component and the AC components in separate fashion. Therefore, when an error in the AC components cannot be corrected, the DC component can be used together with substituted zero AC values for error concealment.

According to the above embodiment of the present invention, deterioration of an image quality of the image decoding device can be reduced.

## Claims

1. An image processing apparatus comprising:
receiving means (101) for receiving run-length encoded AC orthogonal coefficient block data and encoded DC orthogonal coefficient block data representing respective pixel blocks of an image;
error detection means (102-104), responsive to error correction check codes, provided both for the run-length encoded AC orthogonal coefficient block data and for the encoded DC orthogonal coefficient block data, for detecting transmission errors in the received encoded AC and DC orthogonal coefficient block data;
error correction means (102-104) for correcting correctable transmission errors detected in the received encoded AC and DC orthogonal coefficient block data;
decoding means (105,106) for decoding the encoded AC and DC orthogonal coefficient block data, inclusive of any corrected data, to retrieve the orthogonal coefficient block data;
transform means (107), operable on the AC and DC orthogonal coefficient block data, to perform an inverse orthogonal transformation thereon to retrieve pixel block data; and
output means (109), operable on the retrieved pixel block data, to output pixel data for reproducing the image;
characterised by:
error concealment means (105,308), co-operable with said error detection means (102-104), operable to replace the orthogonal coefficient block data constituting a defective block, this being a block produced by the decoding of run length encoded AC orthogonal coefficient block data including an incorrigible transmission error, and the decoding of encoded DC orthogonal coefficient block data, by orthogonal coefficient block data consisting of the DC orthogonal coefficient of the orthogonal coefficient block data retrieved for said defective block and substituted zero-valued AC orthogonal coefficient data, constituting the remainder of a replacement block, provided that no incorrigible error is detected by said error detection means in the DC component of the received encoded block data used to retrieve said DC orthogonal coefficient.

2. Apparatus according to claim 1 wherein said error detection means is responsive to parity check codes.

3. Apparatus according to either of claims 1 or 2 wherein said transform means is operable to perform an inverse discrete cosine transformation.

4. An image processing system comprising:
transmission means (401) for producing and for transmitting run-length encoded AC orthogonal coefficient block data, and also encoded DC orthogonal coefficient block data, representing respective pixel blocks of an image wherein said transmission means includes error check code encoding means (410,411) for adding error check codes to run-length encoded AC orthogonal coefficient block data and to encoded DC orthogonal coefficient block data; and
an image processing apparatus as claimed in claim 1.

5. A system as claimed in claim 4 wherein:
said error check code encoding means (410,411) is operable to add parity check codes to the encoded orthogonal coefficient block data; and
said image processing apparatus is as claimed in claim 2.

6. A system as claimed in either of claims 4 or 5 wherein:
said transmission means includes discrete cosine transform means (407) for producing orthogonal AC and DC coefficient block data representing pixel blocks of an image for encoding and transmission; and
said image processing apparatus is as claimed in claim 3.

7. A method of image processing comprising steps of:
receiving run-length encoded AC orthogonal coefficient block data, and also encoded DC orthogonal coefficient block data, representing respective pixel blocks of an image;
detecting transmission errors in the received encoded AC and DC orthogonal coefficient block data using error correction codes received therewith;
correcting correctable transmission errors detected in the received encoded orthogonal AC and DC coefficient block data;
decoding the encoded orthogonal coefficient block data, inclusive of any corrected data, to retrieve the orthogonal coefficient block data;
performing an inverse orthogonal transformation, on the retrieved orthogonal coefficient block data, to retrieve pixel block data; and
outputting pixel data, from said pixel block data, for reproducing the image;
characterised by:
an error concealment step of replacing the orthogonal coefficient block data constituting a defective block, this being a block produced by the decoding of run-length encoded AC orthogonal coefficient block data including an incorrigible transmission error, and the decoding of encoded DC orthogonal coefficient block data, by orthogonal coefficient block data consisting of the DC orthogonal coefficient of the orthogonal coefficient block data retrieved for said defective block and substituted zero-valued AC orthogonal coefficient data, constituting the remainder of a replacement block, which step is performed provided that no incorrigible error is detected in the DC component of the received encoded block data used to retrieve said DC orthogonal coefficient.

## Patentansprüche

1. Bildverarbeitungsvorrichtung mit
einer Empfangseinrichtung (101) zum Empfang von jeweilige Bildelementblöcke eines Bildes darstellenden lauflängen-kodierten Wechselkomponenten-Orthogonalkoeffizienten-Blockdaten und kodierten Gleichkomponenten-Orthogonalkoeffizienten-Blockdaten,
einer auf Fehlerkorrektur-Prüfcodes ansprechenden Fehler-Erfassungseinrichtung (102-104), die jeweils für die lauflängen-kodierten Wechselkomponenten-Orthogonalkoeffizienten-Blockdaten und für die kodierten Gleichkomponenten-Orthogonalkoeffizienten-Blockdaten bereitgestellt ist, zum Erfassen von Übertragungsfehlern in den empfangenen kodierten Wechsel komponenten- und Gleichkomponenten-Orthogonalkoeffizienten-Blockdaten,
einer Fehlerkorrektureinrichtung (102-104) zum Korrigieren von in den empfangenen kodierten Wechselkomponenten- und Gleichkomponenten-Orthogonalkoeffizienten-Blockdaten erfaßten korrigierbaren Übertragungsfehlern,
einer Dekodiereinrichtung (105, 106) zum Dekodieren der kodierten Wechsel komponenten- und Gleichkomponenten-Orthogonalkoeffizienten-Blockdaten einschließlich aller korrigierten Daten, um die Orthogonalkoeffizienten-Blockdaten wiederzugewinnen,
einer Umwandlungseinrichtung (107), die mit den Wechsel komponenten- und Gleichkomponenten-Orthogonalkoeffizienten-Blockdaten betreibbar ist, um eine inverse Orthogonaltransformation hinsichtlich dieser Daten durchzuführen, um Bildelement-Blockdaten wiederzugewinnen, und
einer Ausgabeeinrichtung (109) für die wiedergewonnenen Bildelement-Blockdaten zum Ausgeben der Bildelementdaten, um das Bild wiederzugeben,
**gekennzeichnet durch**
eine zusammen mit der Fehler-Erfassungseinrichtung (102-104) betreibbare Fehlerverdeckungseinrichtung (105, 308), die betreibbar ist, um die einen Defektblock bildenden Orthogonalkoeffizienten-Blockdaten zu ersetzen, wobei es sich bei diesem Block um einen durch die Dekodierung von einen nicht-korrigierbaren Übertragungsfehler enthaltenden lauflängen-kodierten Wechselkomponenten-Orthogonalkoeffizienten-Blockdaten und durch die Dekodierung von kodierten Gleichkomponenten-Orthogonalkoeffizienten-Blockdaten erzeugten Block handelt, wobei diese durch den Rest eines Ersatzblockes bildende Orthogonalkoeffizienten-Blockdaten ersetzt werden, welche aus dem aus dem Defektblock wiedergewonnenen Gleichkomponenten-Orthogonalkoeffizienten der Orthogonalkoeffizienten-Blockdaten und aus durch den Wert Null ersetzten Wechselkomponenten-Orthogonalkoeffizienten-Daten bestehen, wobei dies unter der Voraussetzung erfolgt, daß kein nicht-korrigierbarer Fehler durch die Fehler-Erfassungseinrichtung in der Gleichkomponente der empfangenen kodierten Blockdaten erfaßt wird, die zum Wiedergewinnen des Gleichkomponenten-Orthogonalkoeffizienten verwendet werden.

2. Vorrichtung nach Anspruch 1, wobei die Fehler-Erfassungseinrichtung auf Paritäts-Prüfcodes anspricht.

3. Vorrichtung nach Anspruch 1 oder 2, wobei die Umwandlungseinrichtung zum Durchführen einer inversen diskreten Kosinustransformation betreibbar ist.

4. Bildverarbeitungssystem, mit
einer Übertragungseinrichtung (401) zum Erzeugen und Übertragen von lauflängen-kodierten Wechselkomponenten-Orthogonalkoeffizienten-Blockdaten und ebenfalls von kodierten Gleichkomponenten-Orthogonalkoeffizienten-Blockdaten, die jeweilige Bildelementblöcke eines Bildes darstellen, wobei die Übertragunseinrichtung eine Fehler-Prüfcode-Kodiereinrichtung (410, 411) zum Hinzufügen von Fehler-Prüfcodes zu den lauflängen-kodierten Wechselkomponenten-Orthogonalkoeffizienten-Blockdaten und den kodierten Gleichkomponenten-Orthogonalkoeffizienten-Blockdaten aufweist, und
einer Bildverarbeitungsvorrichtung nach Anspruch 1.

5. System nach Anspruch 4, wobei
die Fehler-Prüfcode-Kodiereinrichtung (410, 411) zum Hinzufügen von Paritäts-Prüfcodes zu den kodierten Orthogonalkoeffizienten-Blockdaten betreibbar ist, und
es sich bei der Bildverarbeitungsvorrichtung um die nach Anspruch 2 handelt.

6. System nach Anspruch 4 oder 5, wobei
die Übertragungseinrichtung eine Diskrete-Kosinustransformations-Einrichtung (407) zum Erzeugen von die Bildelementblöcke eines Bildes darstellenden orthogonalen Wechsel- und Gleichkomponenten-Koeffizienten-Blockdaten zum Kodieren und zum Übertragen aufweist, und
es sich bei der Bildverarbeitungsvorrichtung um die nach Anspruch 3 handelt.

7. Bildverarbeitungsverfahren mit den Schritten
Empfangen von lauflängen-kodierten Wechselkomponenten-Orthogonalkoeffizienten-Blockdaten und ebenfalls kodierten Gleichkomponenten-Orthogonalkoeffizienten-Blockdaten, die jeweilige Bildelementblöcke eines Bildes darstellen,
Erfassen von Übertragungsfehlern in den empfangenen kodierten Wechsel komponenten- und Gleichkomponenten-Orthogonalkoeffizienten-Blockdaten unter Verwendung von mit diesen Blockdaten empfangenen Fehler-Korrekturcodes,
Korrigieren von in den empfangenen kodierten orthogonalen Wechsel komponenten- und Gleichkomponenten-Koeffizienten-Blockdaten erfaßten korrigierbaren Übertragungsfehlern,
Dekodieren der kodierten Orthogonalkoeffizienten-Blockdaten einschließlich aller korrigierten Daten, um die Orthogonalkoeffizienten-Blockdaten wiederzugewinnen,
Durchführen einer inversen Orthogonaltransformation mit den wiedergewonnenen Orthogonalkoeffizienten-Blockdaten, um Bildelement-Blockdaten wiederzugewinnen, und
Ausgeben der Bildelementdaten aus den Bildelement-Blockdaten, um das Bild wiederzugeben,
**gekennzeichnet durch**
einen Fehlerverdeckungsschritt des Ersetzens von einen Defektblock bildenden Orthogonalkoeffizienten-Blockdaten, wobei es sich bei diesem Block um einen durch die Dekodierung von einen nicht-korrigierbaren Übertragungsfehler enthaltenden lauflängen-kodierten Wechselkomponenten-Orthogonalkoeffizienten-Blockdaten und durch die Dekodierung von kodierten Gleichkomponenten-Orthogonalkoeffizienten-Blockdaten erzeugten Block handelt, wobei diese durch den Rest eines Ersatzblockes bildende Orthogonalkoeffizienten-Blockdaten ersetzt werden, welche aus dem aus dem Defektblock wiedergewonnenen Gleichkomponenten-Orthogonalkoeffizienten der Orthogonalkoeffizienten-Blockdaten und aus durch den Wert Null ersetzten Wechselkomponenten-Orthogonalkoeffizienten-Daten bestehen, wobei dieser Schritt unter der Voraussetzung erfolgt, daß kein nicht-korrigierbarer Fehler in der Gleichkomponente der empfangenen kodierten Blockdaten erfaßt wird, die zum Wiedergewinnen des Gleichkomponenten-Orthogonalkoeffizienten verwendet werden.

## Revendications

1. Appareil de traitement d'images comportant :
un moyen de réception (101) destiné à recevoir des données de blocs de coefficient orthogonal AC à codage par longueur de plages et des données de blocs de coefficient orthogonal DC codées représentant des blocs de pixels respectifs d'une image ;
des moyens (102-104) de détection d'erreur sensibles à des codes de contrôle pour la correction d'erreur, prévus à la fois pour les données de blocs de coefficient orthogonal AC à codage par longueur de plages et pour les données de blocs de coefficient orthogonal DC codées, afin de détecter des erreurs de transmission dans les données de blocs de coefficients orthogonaux AC et DC codées, reçues ;
des moyens (02-104) de correction d'erreur destinés à corriger des erreurs de transmission pouvant être corrigées, détectées dans les données de blocs de coefficients orthogonaux AC et DC codées reçues ;
des moyens de décodage (105, 106) destinés à décoder les données de blocs de coefficients orthogonaux AC et DC codées, y compris toutes données corrigées, pour récupérer les données de blocs de coefficients orthogonaux ;
des moyens de transformation (107) pouvant agir sur les données de blocs de coefficients orthogonaux AC et DC pour effectuer sur eux une transformation orthogonale inverse pour récupérer des données de blocs de pixels ; et
des moyens de sortie (109) pouvant agir sur les données de blocs de pixels récupéres afin de délivrer en sortie les données de pixels pour la reproduction de l'image ;
caractérisé par :
les moyens (105, 308) de masquage d'erreur pouvant coopérer avec lesdits moyens (102-104) de détection d'erreur, pouvant agir pour remplacer les données de blocs de coefficients orthogonaux constituant un bloc défectueux, ceci étant un bloc produit par le décodage de données de blocs de coefficient orthogonal AC codées par longueur de plage comprenant une erreur de transmission incorrigible, et le décodage de données de blocs de coefficient orthogonal DC codées, par des données de blocs de coefficient orthogonal constituées du coefficient orthogonal DC des données de blocs de coefficient orthogonal récupérées pour ledit bloc défectueux des données de coefficient orthogonal AC à valeur zéro substituée, constituant le reste d'un bloc de remplacement, pourvu qu'aucune erreur incorrigible ne soit détectée par lesdits moyens de détection d'erreur dans la composante DC des données de blocs codées recues utilisées pour récupérer ledit coefficient orthogonal DC.

2. Appareil selon la revendication 1, dans lequel lesdits moyens de détection d'erreur réagissent à des codes de contrôle de parité.

3. Appareil selon l'une des revendications 1 ou 2, dans lequel lesdits moyens de transformation peuvent agir pour effectuer une transformation de cosinus discrète inverse.

4. Système de traitement d'images comportant :
des moyens de transmission (401) destinés à produire et transmettre des données de blocs de coefficient orthogonal AC codées par plage de longueur et aussi des données de blocs de coefficient orthogonal DC codées, représentant des blocs de pixels respectifs d'une image, lesdits moyens de transmission comprenant des moyens (410, 411) de codage de code de contrôle d'erreur pour l'addition de codes de contrôle d'erreur à des données de blocs de coefficient orthogonal AC codées par longueur de plage et à des données de blocs de coefficient orthogonal DC codées ; et
un appareil de traitement d'images selon la revendication 1.

5. Système selon la revendication 4, dans lequel :
lesdits moyens (410, 411) de codage de code de contrôle d'erreur peuvent agir pour additionner des codes de contrôle de parité aux données de blocs de coefficient orthogonal codées ; et
ledit appareil de traitement d'images est tel que revendiqué dans la revendication 2.

6. Système selon l'une des revendications 4 ou 5, dans lequel :
lesdits moyens de transmission comprennent des moyens (407) de transformation de cosinus discrète pour la production de données de blocs de coefficients AC et DC orthogonaux représentant des blocs de pixels d'une image pour un codage et une transmission ; et
ledit appareil de traitement d'images est tel que revendiqué dans la revendication 3.

7. Procédé de traitement d'images comprenant les étapes dans lesquelles :
on reçoit des données de blocs de coefficient orthogonal AC codées par plage de longueur, et aussi des données de blocs de coefficient orthogonal DC codées, représentant des blocs de pixels respectifs d'une image ;
on détecte des erreurs de transmission dans les données de blocs de coefficients orthogonaux AC et DC codées et reçues en utilisant des codes de correction d'erreur reçus avec elles ;
on corrige des erreurs de transmission pouvant être corrigées, détectées dans les données de blocs de coefficients AC et DC orthogonaux codées et reçues ;
on décode les données de blocs de coefficient orthogonal codées, y compris toutes données corrigées, pour récupérer les données de blocs de coefficient orthogonal ;
on effectue une transformation orthogonale inverse sur les données de blocs de coefficient orthogonal récupérées pour récupérer des données de blocs de pixels ; et
on délivre en sortie des données de pixels, à partir desdites données de blocs de pixels, pour reproduire l'image ;
caractérisé par :
une étape de masquage d'erreur consistant à remplacer les données de blocs de coefficient orthogonal constituant un bloc défectueux, celui-ci étant un bloc produit par le décodage de données de blocs de coefficient orthogonal AC codées par plage de longueur comprenant une erreur de transmission incorrigible, et le décodage de données de blocs de coefficient orthogonal DC codées, par des données de blocs de coefficients orthogonaux constituées du coefficient orthogonal DC des données de blocs de coefficient orthogonal récupérées pour ledit bloc défectueux et des données de coefficient orthogonal AC de valeur zéro substituée, constituant la partie restante d'un bloc de remplacement, laquelle étape est effectuée, pourvu qu'aucune erreur incorrigible ne soit détectée dans la composante DC des données de blocs codées reçues utilisées pour récupérer ledit coefficient orthogonal DC.
